# NOUVEAU FASCICULE DE BREVET EUROPEEN

(11) **EP 3 016 786 B2**
(45) Date de publication et mention de la décision concernant l'opposition: **03.08.2022**
(45) Mention de la délivrance du brevet: 06.03.2019
(21) Numéro de dépôt: 14739893.7
(22) Date de dépôt: 25.06.2014
(51) Int. Cl.: B26D 3/08, B26F 3/00, G06K 19/07

(54) **OUTILLAGE ET PROCÉDÉ DE FRAGILISATION D'UN CONTOUR DANS UNE CARTE PLASTIQUE MINCE**
VORRICHTUNG UND VERFAHREN ZUM SCHWÄCHEN DES UMFANGS EINER DÜNNEN KUNSTSTOFFKARTE
TOOLING AND METHOD FOR FRAGILIZING THE CONTOUR IN A THIN PLASTIC CARD

(30) Priorité: 01.07.2013 FR 1356359
(43) Date de publication de la demande: 11.05.2016
(73) Titulaire: IDEMIA France, 92700 Colombes (FR)
(72) Inventeur: BOSQUET, Olivier, F-92700 Colombes (FR); SIMMONEAUX, Grégory, F-92700 Colombes (FR)
(74) Mandataire: Cabinet Beau de Loménie
(86) Numéro de dépôt international: PCT/FR2014/051609
(87) Numéro de publication internationale: WO 2015/001228

(56) Documents cités:
- EP-A1- 2 608 116
- DE-A1- 10 012 055
- DE-A1- 19 513 282
- FR-A1- 2 783 202
- FR-A1- 2 960 819

## Description

La présente invention concerne la mise en forme d'une carte plastique mince afin de réaliser dans une telle carte un contour fragilisé apte à pouvoir être ultérieurement rompu, par exemple manuellement.

Une telle réalisation répond, par exemple, à un problème de distribution d'une carte à puce pour téléphone mobile, encore dénommée carte SIM. Une telle carte présente par exemple un petit format ID-000 ou 2FF, défini par la norme ISO 7816, caractérisé par une carte plastique mince et par un contour sensiblement rectangulaire de 25 x 15 mm, avec un des angles coupé à 45°. Du fait de son petit format, une telle carte SIM, risque de se perdre lors des manipulations. Aussi est-elle avantageusement livrée solidaire d'un support de distribution constitué d'une carte plastique mince de plus grand format, typiquement selon un format ID-1 caractérisé par un contour sensiblement rectangulaire de 85,60 x 53,98 mm.

Un moyen avantageux pour réaliser un tel support de distribution consiste à réaliser dans une carte plastique mince de grand format une fragilisation selon un contour correspondant au petit format. Le contour fragilisé de la carte de petit format peut ainsi être rompu, typiquement à la main, afin de séparer la carte de petit format du support de distribution de grand format.

Un tel contour de petit format peut limiter une carte SIM au format 2FF. Il peut encore limiter une carte SIM à l'un des nouveaux formats 3FF, 4FF encore plus réduits, ou tout autre format. Il peut encore limiter un adaptateur de format entre l'un et l'autre de ces formats. Les vendeurs de carte à puce pour téléphone mobile, ne sachant à l'avance le format nécessaire, proposent une carte de grand format comportant une ou plusieurs telles cartes SIM, ainsi qu'un ou plusieurs adaptateurs de format, dont les contours peuvent être le cas échéant imbriqués.

Dans le cas d'un support de distribution, un contour fragilisé a pour fonction de maintenir ensemble deux pièces jusqu'à leur séparation. Dans le cas d'un adaptateur de format, un contour fragilisé a pour fonction soit de maintenir une carte de petit format solidaire d'un adaptateur de grand format si l'ensemble est utilisé dans un récepteur de grand format, soit de permettre une séparation de la carte de petit format si ladite carte est utilisée dans un récepteur de petit format.

Il apparait donc qu'un contour fragilisé doit être suffisamment solide pour que les deux pièces qu'il relie puissent rester et être utilisées de manière solidaire, tout en autorisant une séparation, avantageusement réalisable à la main, sans outillage.

Il est connu au moins deux méthodes pour réaliser un tel contour fragilisé.

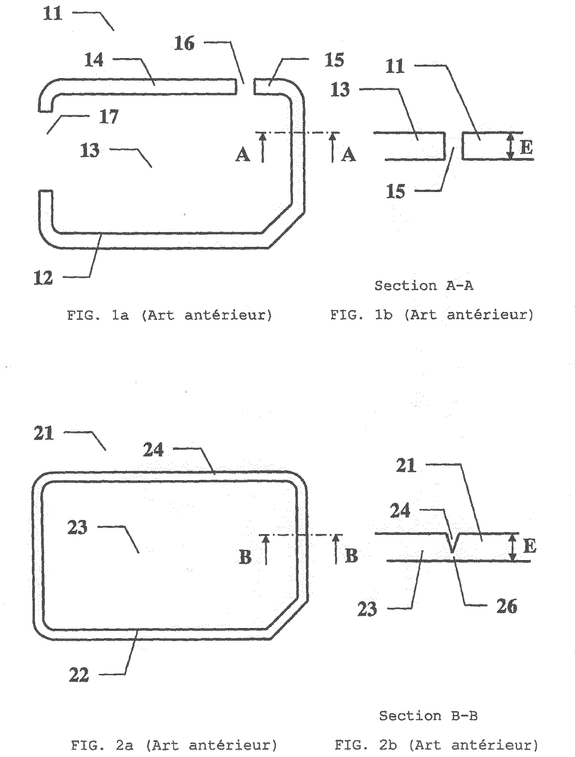

Une première méthode, illustrée aux figures 1a, 1b, consiste à découper le contour 12, sur toute l'épaisseur E de la carte plastique mince 11, sur au moins une partie majoritaire de la longueur du contour 12. Ainsi sur l'exemple illustré, le contour 12 est fragilisé par deux trous 14,15. La carte 13 de petit format, disposée à l'intérieur des deux trous, n'est solidaire de la carte 11 de grand format que par deux ponts 16,17. La séparation de la carte 13 de petit format s'effectue en rompant, typiquement à la main, lesdits ponts 16,17. L'outillage nécessaire à la réalisation d'une telle fragilisation comprend un poinçon de type emporte-pièce pour chacun des trous 14, 15.

Un inconvénient de cette méthode est que les trous 14,15 présentent nécessairement une largeur assez importante. Il est ainsi impossible de réaliser plusieurs contours ainsi fragilisés proches l'un de l'autre. Ceci est problématique avec les nouveaux formats qui imposent des contours imbriqués pouvant être très proches.

Une deuxième méthode, illustrée aux figures 2a,2b, consiste à réalise une découpe partielle 24 le long du contour 22, sur une partie avantageusement majoritaire de l'épaisseur E de la carte plastique mince 21. Cette découpe partielle 24 est pratiquée préférentiellement sur la totalité de la longueur du contour 22. Elle peut comprendre, tel qu'illustré a la figure 2b une unique entaille 24. Alternativement elle peut comprendre deux entailles en regard. La carte 23 de petit format n'est solidaire de la carte 21 de grand format que par l'épaisseur résiduelle 26 non découpée. La séparation de la carte 23 de petit format s'effectue en rompant, typiquement à la main, ladite épaisseur résiduelle 26. La découpe partielle 24 sert avantageusement de guide lors de la rupture. L'outillage nécessaire à la réalisation d'une telle fragilisation comprend au moins une lame apte à réaliser la ou les découpes partielles 24.

Un inconvénient de cette méthode est que les lames sont fragiles et nécessitent des remplacements fréquents.

Une méthode alternative, pouvant le cas échéant être utilisée, de manière complémentaire avec les méthodes de l'art antérieur est fortement souhaitable.

Le document DE 195 13 282 décrit un dispositif de coupe sans matrice, comprenant un poinçon aller et un poinçon retour, les deux poinçons étant alignés et s'actionnant simultanément. Le document EP 2 608 116 décrit une carte à puce et son procédé de fabrication.

L'invention, telle que définie dans la revendication 1, a pour objet un procédé de fragilisation d'un contour d'une carte SIM ou d'un adaptateur de format pour carte SIM dans une carte plastique mince, ladite carte SIM étant de type 2FF, 3FF ou 4FF, comprenant les étapes de : poinçonnage aller au moyen d'un poinçon aller présentant, en plein, une forme sensiblement identique au contour, apte à poinçonner la carte plastique mince selon une direction aller, contre une matrice présentant, en creux, une forme sensiblement identique au contour, alignée avec le poinçon aller, afin de pouvoir accueillir la matière poussée par le poinçon aller, et poinçonnage retour au moyen d'un poinçon retour présentant, en plein, une forme sensiblement identique au contour, aligné avec le poinçon aller, apte à poinçonner la carte plastique mince selon une direction retour opposée à la direction aller.

Selon une autre caractéristique, l'enfoncement retour du poinçon retour est sensiblement égal à l'enfoncement aller du poinçon aller.

Selon une autre caractéristique, le cumul de l'enfoncement aller du poinçon aller et de l'enfoncement retour du poinçon retour est strictement inférieur à l'épaisseur de la carte plastique mince, de manière à laisser persister une épaisseur résiduelle de matière non cisaillée.

Selon une autre caractéristique, la différence entre l'épaisseur de la carte plastique mince et le cumul de l'enfoncement aller du poinçon aller et de l'enfoncement retour du poinçon retour est comprise entre 5% et 100% de l'épaisseur de la carte plastique mince.

Selon une autre caractéristique, le poinçon retour est disposé dans la matrice.

Selon une autre caractéristique, le poinçon retour comprend un moyen de rappel, armé par une poussée du poinçon retour selon la direction aller, de manière à rappeler le poinçon retour selon la direction retour lorsque la poussée cesse.

Selon une autre caractéristique, le procédé comprend encore une étape de réalisation d'une découpe de relaxation, disposée à proximité du contour, et apte à se déformer afin de libérer les contraintes créées par les poinçonnages aller et retour.

Selon une autre caractéristique, le procédé réalise encore une fragilisation d'au moins un deuxième contour, au moyen des étapes de : deuxième poinçonnage aller au moyen d'un deuxième poinçon aller présentant, en plein, une forme sensiblement identique au deuxième contour, apte à poinçonner la carte plastique mince selon une deuxième direction aller, contre une deuxième matrice présentant, en creux, une forme sensiblement identique au deuxième contour, alignée avec le deuxième poinçon aller, afin de pouvoir accueillir la matière poussée par le deuxième poinçon aller, et deuxième poinçonnage retour au moyen d'un deuxième poinçon retour présentant, en plein, une forme sensiblement identique au deuxième contour, aligné avec le deuxième poinçon aller, apte à poinçonner la carte plastique mince selon une deuxième direction retour opposée à la deuxième direction aller.

Selon une autre caractéristique, la deuxième direction aller est identique à la direction aller.

Selon une autre caractéristique, la deuxième direction aller est identique à la direction retour.

Selon une autre caractéristique, le deuxième contour circonscrit le contour.

Selon une autre caractéristique, la distance entre un premier contour et un deuxième contour adjacent est supérieure ou égale à 300 µm.

Il est décrit une carte plastique mince comprenant au moins un contour fragilisé par un tel procédé.

Selon une autre caractéristique, le profil externe du contour, après rupture de la matière de l'épaisseur résiduelle, présente une forme sensiblement évasée, s'ouvrant face à la direction aller.

Selon une autre caractéristique, le dit évasement présente une pente moyenne, relativement à la normale, comprise entre 1 et 10°, préférentiellement entre 4 et 8°.

Selon une autre caractéristique, le profil interne du contour, après rupture de la matière de l'épaisseur résiduelle, présente une forme sensiblement en « S ».

D'autres caractéristiques, détails et avantages de l'invention ressortiront plus clairement de la description détaillée donnée ci-après à titre indicatif en relation avec des dessins sur lesquels :
- la figure 1a, respectivement 1b, déjà décrite, illustre un premier mode de réalisation selon l'art antérieur, en vue de dessus, respectivement en vue sectionnée selon A-A,
- la figure 2a, respectivement 2b, déjà décrite, illustre un deuxième mode de réalisation selon l'art antérieur, en vue de dessus, respectivement en vue sectionnée selon B-B,
- la figure 3 illustre en vue de côté, un outillage pour la mise en œuvre de l'invention,
- la figure 4 illustre en vue sectionnée selon C-C un profil possible du poinçon aller, similaire au profil du poinçon retour et au profil de la matrice,
- les figures 5-7 illustrent les étapes successives du procédé de fragilisation :

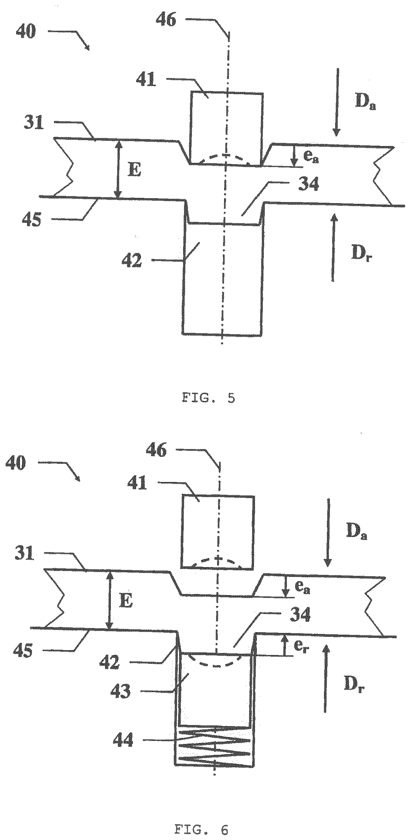

   - figure 5 : poinçonnage aller,
   - figure 6 : retrait du poinçon aller,

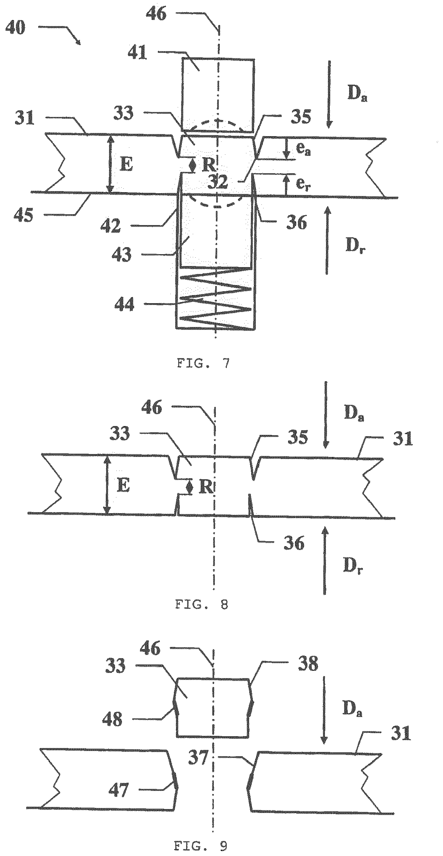

   - figure 7 : poinçonnage retour,
- la figure 8, respectivement 9, présente en vue coupée une carte plastique mince comprenant un profil fragilisé avant, respectivement après, rupture de la matière de l'épaisseur résiduelle,

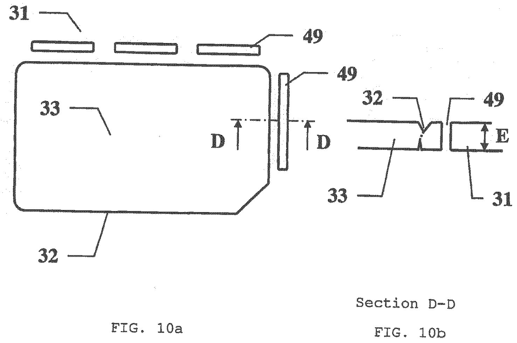

- la figure 10a, respectivement 10b, illustre une découpe de relaxation en vue de dessus, respectivement en vue sectionnée selon D-D.

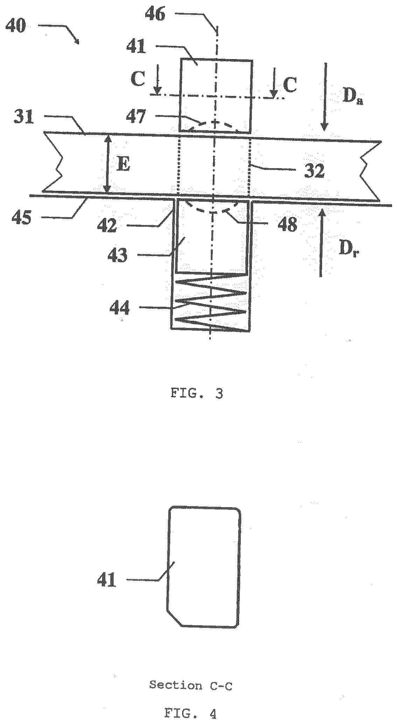

La figure 3 illustre un outillage 40 pour la mise en œuvre de l'invention apte à réaliser une fragilisation d'un contour 32 dans une carte plastique mince 31. Une carte plastique mince 31 s'entend ici d'une carte, sensiblement plane, en matériau plastique dont l'extension selon ledit plan est grande devant son épaisseur E. Une telle carte plastique mince 31 est, par exemple, une carte telle que définie par la norme ISO 7816. Un tel outillage 40 est apte à accueillir une telle carte plastique mince 31.

Au début du procédé, le contour 32 n'existe pas. Il va être créé par le procédé de fragilisation. Les pointillés figurent, pour la compréhension, la future localisation dudit contour 32 ainsi réalisé.

L'outillage 40 comprend un poinçon aller 41, un poinçon retour 43 et une matrice 42. Le poinçon aller 41 présente, en plein, une forme sensiblement identique au contour 32 que l'on veut réaliser.

La figure 4 présente un exemple de section C-C du poinçon aller 41, apte à réaliser un contour 32 correspondant à une carte SIM, sensiblement rectangulaire avec un coin coupé à 45°.

Le poinçon aller 41 est apte à poinçonner la carte plastique mince 31 selon une direction aller Dₐ, ici par exemple descendante dans le plan des figures 3, 5-7.

La matrice 42 présente, en creux, une forme sensiblement identique au contour 32.

La matrice 42 est alignée avec le poinçon aller 41, en ce que leur section respective, sensiblement identiques, se superposent, selon l'axe 46 de poinçonnage. La carte plastique mince 31 est introduite entre le poinçon aller 41 et la matrice 42. Ainsi le poinçonnage aller s'effectue, le poinçon aller 41 s'enfonçant dans l'épaisseur de la carte plastique mince 31 et appuyant la carte plastique mince 31 contre une table 45, dans laquelle est pratiquée la matrice 42 creuse. Ainsi la matrice 42 est capable d'accueillir la matière 34 poussée par le poinçon aller 41.

L'outillage 40 comprend encore un poinçon retour 43. Le poinçon retour 43 présente, en plein, une forme sensiblement identique au contour 32. La carte plastique mince 31 est placée entre le poinçon aller 41 et le poinçon retour 43. Autrement dit, le poinçon retour 43 est disposé, relativement à la carte plastique mince 31, de l'autre côté de la carte plastique mince 31. Il en résulte que la forme de la section du poinçon retour 43 est symétrique de la forme de la section du poinçon aller 41.

Le poinçon retour 43 est aligné avec le poinçon aller 41, en ce que leur section respective, sensiblement identiques, se superposent, selon l'axe 46 de poinçonnage.

Le poinçon retour 43 est apte à poinçonner la carte plastique mince 31 selon une direction retour Dᵣ, opposée à la direction aller Dₐ, ici par exemple montante dans le plan des figures 3, 5-7.

Le poinçon aller 41, respectivement retour 43, présente une face de poinçonnage, faisant face à la carte plastique mince 31, qui peut être plane. Alternativement cette surface de poinçonnage, peut encore être creuse et comporter un évidement 47, respectivement 48, la partie utile de ladite face de poinçonnage étant son bord externe.

Il va maintenant, en référence aux figures 5-7, être décrit le procédé de réalisation d'une fragilisation le long d'un contour 32, au moyen de l'outillage 40.

Avant toute opération, une carte plastique mince 31 est introduite dans l'outillage 40, entre le poinçon aller 41 d'une part, et le poinçon retour 43 et la matrice 42 d'autre part. La carte plastique mince 31 et l'outillage 40 se trouvent dans une configuration semblable à celle de la figure 3.

La carte plastique mince 31 est avantageusement plaquée contre la table 45, par exemple au moyen d'un guide, non représenté pour plus de clarté.

La figure 5 illustre une première étape, consistant en un poinçonnage aller. Au cours de cette étape, le poinçon aller 41 réalise une opération de poinçonnage et s'enfonce dans l'épaisseur E de la carte plastique mince 31 d'un enfoncement aller eₐ, selon une direction aller Dₐ. La carte plastique mince 31 étant disposée contre la matrice 42, dont la forme en creux correspond et est alignée avec celle du poinçon aller 41, la matière 34 poussée par le poinçon aller 41, est accueillie et prend place et forme dans la matrice 42.

La figure 6 illustre une étape intermédiaire, au cours de laquelle le poinçon aller 41 est retiré. Pour cela, le poinçon aller 41 est déplacé selon la direction retour Dᵣ, opposée à la direction aller Dₐ de poinçonnage aller, selon une course de retrait au moins égale à l'enfoncement aller eₐ précédemment réalisé.

La figure 7 illustre une deuxième étape, consistant en un poinçonnage retour. Au cours de cette étape, le poinçon retour 43 réalise une opération de poinçonnage retour, en ce qu'il repousse la matière 34, précédemment poussée dans la matrice 42 par le poinçonnage aller, vers la carte plastique mince 31. Le poinçonnage retour s'effectue selon une direction retour Dᵣ, opposée à la direction aller Dₐ et présente une course ou enfoncement retour eᵣ. La matière 34 précédemment poussée hors de l'épaisseur E de la carte mince 31 par le poinçonnage aller est ainsi au moins partiellement remise en place dans ladite épaisseur E.

Cependant le double poinçonnage aller et retour a entretemps produit un premier cisaillement 35, de profondeur sensiblement égale à l'enfoncement aller eₐ du poinçon aller 41, partant de la surface de la carte plastique mince 31 située du côté du poinçon aller 41 et un deuxième cisaillement 36, de profondeur sensiblement égale à l'enfoncement retour eᵣ du poinçon retour 43, partant de l'autre surface de la carte plastique mince 31 située du côté du poinçon retour 43. Ces deux cisaillements 35,36 sont disposés sensiblement en regard l'un de l'autre et au droit de la ligne souhaitée pour le contour 32, et réalisent ainsi un contour fragilisé.

La partie 33, qui peut être une carte de petit format 33, délimitée par les cisaillements 35,36 formant ledit contour 32, reste solidaire de la carte plastique mince 31, mais peut aussi en être détachée par une pression, par exemple manuelle, réalisant une rupture de l'épaisseur résiduelle R non cisaillée.

Il peut être noté que le procédé tel que décrit précédemment peut aisément être appliqué à la réalisation d'au moins deux contours fragilisés concentriques, même très proches les uns des autres. Les différents poinçonnages aller et retour peuvent même être réalisés au cours d'une même opération, par exemple au moyen de poinçons aller, respectivement retour, télescopiques.

Il peut être noté que l'étape de retrait du poinçon aller 41, peut être antérieure ou postérieure à l'étape de poinçonnage retour. Selon un premier mode de réalisation, illustrée à la figure 6, le poinçon aller 41 est retiré, selon la direction retour Dᵣ, afin de libérer l'espace et permettre le poinçonnage retour. Selon un deuxième mode de réalisation, le poinçonnage retour repousse la matière 34 précédemment déformée selon la direction retour Dᵣ. La matière 34 repousse à son tour le poinçon aller 41 et réalise ainsi le retrait du poinçon aller 41.

L'enfoncement retour eᵣ du poinçon retour 43 lors du poinçonnage retour peut être inférieur à l'enfoncement aller eₐ du poinçon aller 41. Dans ce cas la matière 34 déplacée lors du poinçonnage aller n'est pas totalement replacée dans l'épaisseur E de la carte plastique mince 31 et reste un peu en deçà, dépassant de l'une des faces, ici la face inférieure.

L'enfoncement retour eᵣ du poinçon retour 43 lors du poinçonnage retour peut être supérieur à l'enfoncement aller eₐ du poinçon aller 41. Dans ce cas la matière 34 déplacée lors du poinçonnage aller traverse l'épaisseur E de la carte plastique mince 31 et est déplacée au-delà, dépassant de l'autre des faces, ici la face supérieure.

Selon une caractéristique préférentielle, l'enfoncement retour eᵣ du poinçon retour 43 lors du poinçonnage retour est pris sensiblement égal à l'enfoncement aller eₐ du poinçon aller 41. Ainsi la matière, initialement disposée dans l'épaisseur E de la carte plastique mince 31, en regard des poinçons aller 41 et retour 43, est replacée dans cette même épaisseur E. Rien ne dépasse de l'une ou de l'autre des faces de la carte plastique mince 31.

Afin que la partie 33 interne au contour 32 reste solidaire de la carte plastique mince 31, il convient qu'une épaisseur résiduelle R de matière non cisaillée persiste. Cette épaisseur résiduelle R est égale à la différence entre l'épaisseur E de la carte plastique mince 31 et le cumul de la profondeur du premier cisaillement 35 et de la profondeur du deuxième cisaillement 36.

La profondeur du premier cisaillement 35 est sensiblement égale à l'enfoncement aller eₐ du poinçon aller 41. La profondeur du deuxième cisaillement 36 est sensiblement égale à l'enfoncement retour eᵣ du poinçon retour 43. On entend ici par cumul, la somme en valeur absolue, soit |eₐ| + |eᵣ|. Pour qu'une épaisseur résiduelle R persiste, il convient que le cumul de l'enfoncement aller eₐ et de l'enfoncement retour eᵣ reste inférieur à l'épaisseur E de la carte plastique mince 31.

Soit R = E - (|eₐ| + |eᵣ|), pour que R >0, il faut que E > |eₐ| + |eᵣ|.

En combinant les deux caractéristiques précédentes, l'enfoncement retour eᵣ du poinçon retour 43 égal à l'enfoncement aller eₐ du poinçon aller 41, eₐ = eᵣ, et une épaisseur résiduelle R persistante, R >0, E > |eₐ| + |eᵣ|, il découle que pour qu'une épaisseur résiduelle R existe, il convient que l'enfoncement retour eᵣ du poinçon retour 43, égal à l'enfoncement aller eₐ du poinçon aller 41, soit inférieur à 50% de l'épaisseur E de la carte plastique mince 31. Soit E > |eₐ| + |eᵣ|, et eₐ = eᵣ, qui donne E/2 > |eₐ| ou E/2 > |eᵣ|.

A l'extrême, si l'épaisseur E de la carte plastique mince 31 est égale au cumul |eₐ| + |eᵣ| des enfoncements eₐ, eᵣ, il apparait que l'épaisseur résiduelle R s'annule.

Ceci peut s'avérer préjudiciable pour la solidarisation de la partie 33 avec la carte plastique mince 31. Aussi est-il préférable de conserver une certaine marge. Des essais successifs ont montré qu'une marge R d'au moins 5% de l'épaisseur E de la carte plastique mince 31 était satisfaisante pour assurer une bonne solidarisation, tout en réalisant une fragilisation permettant un détachement aisé. Aussi la différence R entre l'épaisseur E de la carte plastique mince 31 et le cumul |eₐ| + |eᵣ| de l'enfoncement aller eₐ du poinçon aller 41 et de l'enfoncement retour eᵣ du poinçon retour 42 est avantageusement au moins égale à 5% de l'épaisseur E de la carte 31. La différence R peut être plus importante, jusqu'à atteindre une valeur de 100%, correspondant à une absence de prédécoupe et donc exclue de l'intervalle. Il est à noter que plus la valeur de la différence R augmente et plus la rupture afin de séparer la carte de petit format 33 devient difficile. Aussi une valeur comprise entre 5 et 20% est avantageusement préférée.

Afin que l'opération de poinçonnage aller s'effectue correctement dans la matrice 42, il convient qu'il existe un léger jeu, de l'ordre de quelques µ à quelques dizaines de µ entre la forme du poinçon aller 41 et la forme de la matrice 42, cette dernière étant légèrement à l'extérieur.

Autrement dit, les trois formes du poinçon aller 41, du poinçon retour 43 et de la matrice 42 étant sensiblement identiques à la forme du contour 32, la forme du poinçon aller 41 est inscrite dans le contour 32, tandis que la forme de la matrice 42 est circonscrite au contour 32.

Aussi si la forme du poinçon retour 43 est identique à la forme du poinçon aller 41, cette forme se retrouve inscrite dans la forme de la matrice 42 avec un certain jeu. Ce jeu permet au poinçon retour 43 d'être disposé dans la matrice 42 et de pouvoir y coulisser librement.

Selon un premier mode de réalisation, le poinçon retour 43 est actionné indépendamment du poinçon aller 41. Le poinçon retour 43 est retiré à distance suffisante de la carte plastique mince 31 ou au moins libre d'être déplacé passivement lors du poinçonnage aller. De manière analogue, le poinçon aller 41 est retiré à distance suffisante de la carte plastique mince 31 ou au moins libre d'être déplacé passivement lors du poinçonnage retour. Le procédé est alors réalisé en deux opérations indépendantes, un poinçonnage aller où le poinçon aller 41 est mobilisé par un premier actionneur, suivi d'un poinçonnage retour où le poinçon retour 43 est mobilisé par un deuxième actionneur.

Selon un autre mode de réalisation, le poinçon retour 43 comprend un moyen de rappel 44. Ce moyen de rappel 44 est disposé de telle manière à être armé par une poussée du poinçon retour 43 selon la direction aller Dₐ et être ainsi apte à rappeler le poinçon retour 43 selon la direction retour Dᵣ lorsque la poussée cesse.

Ainsi, avantageusement, lors du poinçonnage aller, le poinçon aller 41 se déplace selon la direction aller Dₐ. Ce faisant il déplace la matière 34. Le poinçon retour 43, libre de coulisser selon cette direction aller Dₐ, est alors déplacé, sous l'action de la matière 34, qui le pousse selon cette direction aller Dₐ. Durant ce déplacement, le poinçon retour 43 s'oppose au moyen de rappel 44 et arme ce dernier en créant une force de rappel.

A l'issue de l'étape de poinçonnage aller, le poinçon aller 41 se retire, en se déplaçant selon la direction retour Dᵣ. Ce faisant il supprime la poussée exercée sur la matière 34 et le poinçon retour 43. Le poinçon retour 43 ainsi libéré se retrouve uniquement soumis à la force de rappel exercée par le moyen de rappel 44. Sous l'effet de cette force de rappel, le poinçon retour 43 est déplacé selon la direction retour Dᵣ et réalise alors l'étape de poinçonnage retour.

Avantageusement, selon ce deuxième mode de réalisation, un unique actionneur est nécessaire pour actionner le poinçon aller 41. Le poinçon retour 43 est actionné de manière passive, par le moyen de rappel 44, en réponse à l'étape de poinçonnage aller.

La figure 8 illustre le résultat du procédé précédemment décrit, à l'issue du procédé, avant rupture de la matière non cisaillée : une carte plastique mince 31 comprenant un contour fragilisé 32 délimitant une carte de petit format 33, solidaire de la carte plastique mince 31 du fait de la persistance de matière non cisaillée sur une épaisseur résiduelle R. Un tel ensemble peut ainsi être utilisé dans un lecteur de carte au format de la carte plastique mince 31.

La figure 9 illustre le résultat du procédé précédemment décrit, à l'issue du procédé, après rupture, de la matière non cisaillée. Cette rupture est typiquement réalisée par un appui manuel sur la carte de petit format 33 de préférence selon la direction retour Dᵣ. Ceci sépare la carte de petit format 33 de la carte plastique mince 31.

Il convient de remarquer que le procédé, comprenant un poinçonnage aller suivi d'un poinçonnage retour n'est pas symétrique. Aussi il n'est pas étonnant que le résultat produit ne soit pas symétrique. L'entaille 35, du côté du poinçon aller 41, est formée par le poinçonnage aller qui étire la matière de manière libre et par la remise en place de ladite matière par le poinçonnage retour. Ceci tend à produire une entaille 35 relativement large et donc située plus à l'extérieur du contour 32, relativement à l'autre entaille 36. Au contraire, l'entaille 36, du côté du poinçon retour 43, est formée par le poinçonnage aller mais de manière contrainte par la matrice 42 et par la remise en place de ladite matière par le poinçonnage retour. Ceci tend à produire une entaille 36 relativement étroite et donc située plus à l'intérieur du contour 32, relativement à l'entaille 35.

Il s'ensuit plusieurs conséquences. L'ouverture relativement plus importante de l'entaille 35, du côté aller, va créer une différence entre le profil 37 de la carte plastique mince 31 et le profil 38 de la carte de petit format 33, du côté aller. La carte plastique 31 présentant, vers la face du côté aller, un profil 37 évasé, s'ouvrant face à la direction aller Dₐ. Au contraire la carte de petit format 33 présente, vers la face du côté aller, un profil 38 se refermant.

La relative étroitesse de l'entaille 36, du côté retour, conduit à des profils 37,38 respectifs de la carte plastique mince 31 et de la carte de petit format 33, plus similaires, du côté retour.

Le décalage entre la position plus externe de l'entaille 35, du côté aller, et la position plus interne de l'entaille 36, du côté retour, conduit à une inclinaison de la zone 47,48 issue de la rupture de la matière résiduelle. Cette inclinaison est de même sens que l'ouverture de l'entaille 35 du côté aller, et vient prolonger l'évasement du profil 37 de la carte plastique mince 31. Ainsi, tel que visible à la figure 9, le profil 37 de la carte plastique mince 31 est évasé sur plus de la moitié de l'épaisseur E, plus précisément sur une hauteur sensiblement égale à l'enfoncement aller eₐ augmentée de l'épaisseur résiduelle R, l'évasement s'ouvrant face à la direction aller Dₐ.

En fonction des conditions de réalisation des entailles 35,36, qui peuvent être variable en termes de charge appliquée lors des poinçonnages et en termes de vitesse de poinçonnage, il est possible de faire varier les formes des entailles 35,36 et donc des profils 37,38. Ainsi la pente moyenne de l'évasement peut varier d'une valeur angulaire comprise entre 1 et 10°. Afin que les propriétés avantageuses décrites plus avant soient bien sensibles, il est préféré une pente moyenne comprise entre 4 et 8°. Les valeurs angulaires indiquées sont mesurées relativement à la normale à la surface de la carte 31.

Les formes respectives des entailles 35,36, et le décalage des entailles 35,36 l'une par rapport à l'autre, conduisent à conformer le profil 38 de la carte de petit format 33 selon une forme sensiblement en « S ». En effet tel qu'illustré à la figure 9, le profil 38 peut être décomposé en trois zones selon l'épaisseur. Dans une première zone, proche de la surface du côté aller, le profil 38 est sensiblement rentrant. Dans une deuxième zone, centrale, correspondant à la zone de rupture 48, le profil 38 change d'orientation et est orienté sensiblement parallèle à la zone de rupture 47 de la carte 31, évasé s'ouvrant face à la direction aller Dₐ. Dans une troisième zone, proche de la surface du côté retour, le profil 38 change à nouveau d'orientation. Ces deux changements d'orientation confèrent au profil 38 de la carte de petit format une forme que l'on peut décrire en « S » ou en « Z ».

Il résulte de manière surprenante, que la combinaison de ces deux formes de profil 37,38, produit les propriétés avantageuses suivantes. Du fait de l'évasement, la partie détachable qu'est la carte de petit format 33 peut être extraite de la carte plastique mince 31 beaucoup plus aisément du côté de l'ouverture de l'évasement, soit selon la direction retour Dᵣ, que de l'autre côté.

Du fait des formes des deux profils 37,38, la carte de petit format 33 après avoir été extraite peut être replacée dans la carte plastique mince 31. Cette remise en place peut se faire par la même face, selon la direction aller Dₐ, mais s'avère nettement plus difficile par l'autre face, selon la direction retour Dᵣ. L'évasement du profil 37 de la carte plastique mince 31 en conjonction avec la forme du profil 38 de la carte 31, principalement dans la zone de rupture 48, assure une butée de la carte de petit format 33 dans la carte plastique mince 31, sensiblement à la même hauteur qu'initialement, avant la fragilisation. Ainsi, même après rupture de la matière résiduelle séparant une carte de petit format 33 d'un adaptateur de plus grand format 31, ladite carte de petit format 33 peut être remise en place dans ledit adaptateur de plus grand format 31 afin d'être utilisée dans un lecteur de grand format. Ceci est avantageux en ce que la plupart des lecteurs peuvent assurer le maintien/la butée selon la direction opposée à celle assurée par l'évasement.

Avantageusement encore, la conjonction des formes des profils 37,38, plus particulièrement dans la partie entre la zone proche du côté retour et la zone de rupture 47,48, le changement d'orientation du profil 37 de la carte plastique mince 31 et le changement d'orientation correspondant en regard du profil 38 de la carte de petit format 33, réalise un effet de « clipsage » qui assure un maintien en place de la carte de petit format 33, une fois remise en place dans la carte plastique mince 31.

L'état de surface au niveau des zones de rupture 47,48, du fait même de la rupture, est plus perturbé et présente une rugosité plus importante pouvant aller jusqu'à la présence de bavures de rupture. Cet état de surface présent sur les deux zones de rupture 47,48 se retrouvant en regard après remise en place de la carte 33 de petit format, contribue encore au maintien en place de la carte de petit format 33, alors que la rupture a été réalisée.

Le procédé selon l'invention crée ainsi un profil fragilisé 32 qui peut être rompu afin de séparer une carte de petit format 33, d'une carte plastique mince 31. Cette séparation est avantageusement réversible, puisque la carte de petit format 33 peut être remise en place avec un maintien satisfaisant. La carte de petit format 33 peut ainsi, à volonté, être extraite pour être utilisée seule, ou remise en place pour être utilisée, par exemple dans un adaptateur de format 31.

Le poinçonnage aller étire la matière de la carte plastique mince 31. Ainsi, le volume de matière augmente. Aussi, lors du poinçonnage retour, qui replace la matière dans l'épaisseur de la carte 31, sans pouvoir comprimer la matière, il apparait une contrainte de pression à l'intérieur de la matière, principalement localisée au niveau du contour fragilisé 32.

Aussi, tel qu'illustré à la figure 10a, respectivement 10b, figurant en vue de face, respectivement en vue de profil, une même carte 31 dans laquelle est réalisée un contour fragilisé 32 délimitant une carte de petit format 33, il est avantageusement pratiqué au moins une découpe de relaxation 49. Cette découpe de relaxation 49, traversante relativement à l'épaisseur E de la carte plastique mince 31, présente par exemple une forme allongée sensiblement alignée avec le contour 32. Ainsi une déformation de cette découpe 4, dont les deux bords longs peuvent se rapprocher permet avantageusement de relaxer une contrainte de compression formé lors de la réalisation du contour 32 adjacent. Une telle découpe de relaxation 49 peut indifféremment être disposée d'un côté ou de l'autre du contour 32.
Il est possible d'appliquer au moins une nouvelle fois le procédé précédent afin de fragiliser un deuxième contour. Pour cela le procédé comprend encore un deuxième poinçonnage aller au moyen d'un deuxième poinçon aller présentant, en plein, une forme sensiblement identique au deuxième contour. Ce deuxième poinçon aller est apte à poinçonner la carte plastique mince selon une deuxième direction aller, contre une deuxième matrice présentant, en creux, une forme sensiblement identique au deuxième contour, alignée avec le deuxième poinçon aller, afin de pouvoir accueillir la matière poussée par le deuxième poinçon aller. Ensuite le procédé comprend encore un deuxième poinçonnage retour au moyen d'un deuxième poinçon retour présentant, en plein, une forme sensiblement identique au deuxième contour, aligné avec le deuxième poinçon aller, apte à poinçonner la carte plastique mince selon une deuxième direction retour opposée à la deuxième direction aller.

Il est ainsi possible de réaliser deux ou plus contours fragilisés successivement imbriqués. Dans un tel cas de réalisation de contour multiples imbriqués, l'ordre de réalisation de ces contours est avantageusement centrifuge, du plus petit vers le plus grand.

Il est possible de réaliser les deuxième poinçonnages aller et retour selon les mêmes directions que celles du poinçonnage aller et retour. Ceci est avantageux en ce qu'il n'est pas besoin de retourner l'outillage ou la carte 1 entre les poinçonnages du contour 32 et les deuxième poinçonnages du deuxième contour. Dans ce cas la deuxième direction aller est identique à la direction aller Dₐ, et la deuxième direction retour est identique à la direction retour Dᵣ.

Alternativement, il est possible d'alterner. Dans ce cas la deuxième direction aller est identique à la direction retour Dᵣ, et la deuxième direction retour est identique à la direction aller Dₐ. Ceci est avantageux au regard de l'évasement précédemment décrit.

Il a été vu que le procédé de fragilisation et plus particulièrement la séquence poinçonnage aller et poinçonnage retour créait un profil évasé, s'ouvrant vers le côté aller. Ceci privilégie une extraction et/ou une remise en place de la carte 33 contenue dans le profil 32 par le côté aller.

En alternant les directions aller/retour du procédé de fragilisation entre un premier contour 32 et un deuxième contour, il est réalisé aussi une alternance des évasements : l'évasement du premier contour 32 s'ouvre vers une première direction, la direction aller Dₐ, tandis que l'évasement du deuxième contour s'ouvre vers la direction opposée.

Ceci est avantageux en ce qu'une extraction et/ou une remise en place de la carte 33 contenue dans le profil 32, est privilégiée, par un côté, ici le côté aller, tandis qu'une extraction et/ou une remise en place de la partie contenue dans le deuxième profil, est privilégiée par le côté opposé. Une telle disposition réalise ainsi un détrompage. Ceci évite, lors de la rupture d'un contour, de se tromper de contour.

Le procédé ainsi décrit permet de réaliser au moins deux contours imbriqués, le contour 32 intérieur délimitant une carte 33 de petit format et le deuxième contour extérieur délimitant un adaptateur de format plus grand.

Une application particulièrement avantageuse est une réalisation où la carte 33 est au format 4FF et où l'adaptateur est au format 3FF.

Il est encore possible d'imbriquer d'autres contours à l'intérieur ou autour du deuxième contour. Il est ainsi possible de réaliser un tout-en-un comprenant une carte au format 4FF, comprenant autour un adaptateur 3FF, puis autour un adaptateur 2FF, le tout étant disposé dans une carte 31 au format 1FF.

Avec de tels contours imbriqués, une question qui peut se poser est de connaitre la distance minimale à respecter entre deux contours consécutifs. Bien que la réponse à cette question dépende du matériau plastique utilisé, des essais ont permis d'atteindre une largeur minimale de 300 µm entre deux contours adjacents, avec les matériaux plastiques couramment utilisés.

Une telle valeur est particulièrement intéressante en ce qu'elle est inférieure à la distance moyenne de 330 µm qui peut se déduire de la norme ETSI entre un contour au format 4FF et un contour au format 3FF, telle qu'elle apparait entre les bords horizontaux supérieurs de ces formats.

Cette caractéristique est ainsi un gage de faisabilité d'une carte de format 4FF incluse dans son adaptateur au format 3FF, les deux contours, de la carte et de l'adaptateur pouvant être réalisés par le procédé.

## Revendications

1. Procédé de fragilisation d'un contour (32) d'une carte SIM ou d'un adaptateur de format pour carte SIM dans une carte plastique mince (31), ladite carte SIM étant de type 2FF, 3FF ou 4FF, ***caractérisé* en ce qu'il** comprend les étapes de :
- poinçonnage aller au moyen d'un poinçon aller (41) présentant, en plein, une forme sensiblement identique au contour (32), apte à poinçonner la carte plastique mince (31) selon une direction aller (Dₐ), contre une matrice (42) présentant, en creux, une forme sensiblement identique au contour (32), alignée avec le poinçon aller (41), afin de pouvoir accueillir la matière poussée (34) par le poinçon aller (41), et
- poinçonnage retour au moyen d'un poinçon retour (43) présentant, en plein, une forme sensiblement identique au contour (32), aligné avec le poinçon aller (41), apte à poinçonner la carte plastique mince (31) selon une direction retour (Dᵣ) opposée à la direction aller (Dₐ) .

2. Procédé selon la revendication **1,** où l'enfoncement retour (eᵣ) du poinçon retour (43) est sensiblement égal à l'enfoncement aller (eₐ) du poinçon aller (41).

3. Procédé selon la revendication **1** ou **2,** où le cumul de l'enfoncement aller (eₐ) du poinçon aller (41) et de l'enfoncement retour (eᵣ) du poinçon retour (43) est strictement inférieur à l'épaisseur (E) de la carte plastique mince (31), de manière à laisser persister une épaisseur résiduelle (R) de matière non cisaillée.

4. Procédé selon l'une quelconque des revendications **1** à **3,** où la différence entre l'épaisseur (E) de la carte plastique mince (31) et le cumul de l'enfoncement aller (eₐ) du poinçon aller (41) et de l'enfoncement retour (eᵣ) du poinçon retour (43) est comprise entre 5% et 100% de l'épaisseur (E) de la carte plastique mince (31).

5. Procédé selon l'une quelconque des revendications **1** à **4,** où le poinçon retour (43) comprend un moyen de rappel (44), armé par une poussée du poinçon retour (43) selon la direction aller (Dₐ), de manière à rappeler le poinçon retour (43) selon la direction retour (Dᵣ) lorsque la poussée cesse.

6. Procédé selon l'une quelconque des revendications **1** à **5,** comprenant encore une étape de réalisation d'une découpe de relaxation (49), disposée à proximité du contour (32), et apte à se déformer afin de libérer les contraintes créées par les poinçonnages aller et retour.

7. Procédé selon l'une quelconque des revendications **1** à **6,** réalisant encore une fragilisation d'au moins un deuxième contour, au moyen des étapes de :
- deuxième poinçonnage aller au moyen d'un deuxième poinçon aller présentant, en plein, une forme sensiblement identique au deuxième contour, apte à poinçonner la carte plastique mince (31) selon une deuxième direction aller, contre une deuxième matrice présentant, en creux, une forme sensiblement identique au deuxième contour, alignée avec le deuxième poinçon aller, afin de pouvoir accueillir la matière poussée par le deuxième poinçon aller, et
- deuxième poinçonnage retour au moyen d'un deuxième poinçon retour présentant, en plein, une forme sensiblement identique au deuxième contour, aligné avec le deuxième poinçon aller, apte à poinçonner la carte plastique mince (31) selon une deuxième direction retour opposée à la deuxième direction aller.

8. Procédé selon la revendication **7,** où la deuxième direction aller est identique à la direction aller (Dₐ) .

9. Procédé selon la revendication **7,** où la deuxième direction aller est identique à la direction retour (Dᵣ),

10. Procédé selon l'une quelconque des revendications **1** à **9,** où le deuxième contour circonscrit le contour (32).

11. Procédé selon l'une quelconque des revendications **1** à **10,** où la distance entre un premier contour (32) et un deuxième contour adjacent est supérieure ou égale à 300 µm.

## Patentansprüche

1. Verfahren zum Vorstanzen einer Kontur (32) einer SIM-Karte oder eines Formatadapters für die SIM-Karte in einer dünnen Kunststoffkarte (31), **dadurch gekennzeichnet, dass** es die Schritte umfasst:
- Vorwärtsstanzen mittels einer Vorwärtsstanze (41), die eine im Wesentlichen mit der Kontur (32) identische massive Form aufweist und geeignet ist, die dünne Kunststoffkarte (31) in einer Vorwärtsrichtung (Dₐ) gegen eine Matrize (42) zu stanzen, die eine im Wesentlichen mit der Kontur (32) identische hohle Form aufweist und an die Vorwärtsstanze (41) angepasst ist, um das durch die Vorwärtsstanze (41) geschobene Material (34) aufnehmen zu können, und
- Rücklaufstanzen mittels einer Rücklaufstanze (43), die eine im Wesentlichen mit der Kontur (32) identische massive Form aufweist und an die Vorwärtsstanze (41) angepasst und geeignet ist, die dünne Kunststoffkarte (31) in einer Rücklaufrichtung (Dᵣ) entgegen der Vorwärtsrichtung (Dₐ) zu stanzen.

2. Verfahren gemäß Anspruch 1, wobei der Rücklaufeintrieb (eᵣ) der Rücklaufstanze (43) im Wesentlichen gleich dem Vorwärtseintrieb (eₐ) der Vorwärtsstanze (41) ist.

3. Verfahren gemäß Anspruch 1 oder 2, bei dem die Summe aus dem Vorwärtseintrieb (eₐ) der Vorwärtsstanze (41) und dem Rücklaufeintrieb (eᵣ) der Rücklaufstanze (43) eindeutig geringer ist als die Dicke (E) der dünnen Kunststoffkarte (31), so dass eine Restdicke (R) von ungeschorenem Material bestehen bleibt.

4. Verfahren gemäß einem der Ansprüche 1 bis 3, wobei der Unterschied zwischen der Dicke (E) der dünnen Kunststoffkarte (31) und der Summe aus dem Vorwärtseintrieb (eₐ) der Vorwärtsstanze (41) und dem Rücklaufeintrieb (eᵣ) der Rücklaufstanze (43) zwischen 5 % und 100 % der Dicke (E) der dünnen Kunststoffkarte (31) beträgt.

5. Verfahren gemäß einem der Ansprüche 1 bis 4, wobei die Rücklaufstanze (43) ein Rückholmittel (44) umfasst, das durch einen Druck der Rücklaufstanze (43) in der Vorwärtsrichtung (Dₐ) aktiviert wird, so dass die Rücklaufstanze (43) in der Rücklaufrichtung (Dᵣ) zurückgeholt wird, wenn der Druck aufhört.

6. Verfahren gemäß einem der Ansprüche 1 bis 5, das ferner einen Schritt des Durchführens eines Entspannungsschnittes (49) umfasst, der nahe der Kontur (32) angeordnet und in der Lage ist, sich zu verformen, um die durch das Vorwärts- und Rücklaufstanzen erzeugten Spannungen freizusetzen.

7. Verfahren gemäß einem der Ansprüche 1 bis 6, wobei ein weiteres Vorstanzen mindestens einer zweiten Kontur mittels der folgenden Schritte umgesetzt wird:
- zweites Vorwärtsstanzen mittels einer zweiten Vorwärtsstanze, die eine im Wesentlichen mit der zweiten Kontur identische massive Form aufweist und geeignet ist, die dünne Kunststoffkarte (31) in einer zweiten Vorwärtsrichtung gegen eine zweite Matrize zu stanzen, die eine im Wesentlichen mit der zweiten Kontur identische hohle Form aufweist und an die zweite Vorwärtsstanze angepasst ist, um das durch die zweite Vorwärtsstanze geschobene Material aufnehmen zu können, und
- zweites Rücklaufstanzen mittels einer zweiten Rücklaufstanze, die eine im Wesentlichen mit der zweiten Kontur identische massive Form aufweist und an die zweite Vorwärtsstanze angepasst und geeignet ist, die dünne Kunststoffkarte (31) in einer zweiten Rücklaufrichtung entgegen der zweiten Vorwärtsrichtung zu stanzen.

8. Verfahren gemäß Anspruch 7, wobei die zweite Vorwärtsrichtung identisch mit der Vorwärtsrichtung (Dₐ) ist.

9. Verfahren gemäß Anspruch 7, wobei die zweite Vorwärtsrichtung identisch mit der Rücklaufrichtung (Dᵣ) ist.

10. Verfahren gemäß einem der Ansprüche 1 bis 9, wobei die zweite Kontur die Kontur (32) umschließt.

11. Verfahren gemäß einem der Ansprüche 1 bis 10, wobei der Abstand zwischen einer ersten Kontur (32) und einer benachbarten zweiten Kontur größer oder gleich 300 µm ist.

## Claims

1. A method of weakening an outline (32) of a SIM card or a format adapter for a SIM card in a thin plastics card (31), said SIM card being of the 2FF, 3FF or 4FF type, ***characterized in that*** it comprises:
- a go punching step by means of a go punch (41) presenting a solid shape substantially identical to the outline (32) and suitable for punching the thin plastics card (31) along a go direction (Dₐ) against a die (42) presenting a hollow shape substantially identical to the outline (32) and in alignment with the go punch (41) in order to be able to receive the material (34) pushed by the go punch (41), and
- a return punching step by means of a return punch (43) presenting a solid shape substantially identical to the outline (32) in alignment with the go punch (41) and suitable for punching the thin plastics card (31) along a return direction (Dᵣ) opposite to the go direction (Dₐ).

2. A method according to claim 1, wherein the return stroke (eᵣ) of the return punch (43) is substantially equal to the go stroke (eₐ) of the go punch (41).

3. A method according to claim 1 or 2, wherein the sum of the go stroke (eₐ) of the go punch (41) plus the return stroke (eᵣ) of the return punch (43) is strictly less than the thickness (E) of the thin plastics card (31) so as to leave remaining a residual thickness (R) of intact material.

4. A method according to any one of claims 1 to 3, wherein the difference between the thickness (E) of the thin plastics card (31) and the sum of the go stroke (eₐ) of the go punch (41) plus the return stroke (eᵣ) of the return punch (43) lies in the range 5% to 100% of the thickness (E) of the thin plastics card (31).

5. A method according to any one of claims 1 to 4, wherein the return punch (43) includes return means (44) loaded by thrust from the return punch (43) along the go direction (Dₐ) so as to urge the return punch (43) along the return direction (Dᵣ) when the thrust ceases.

6. A method according to any one of claims 1 to 5, further including a step of making a relaxation cut (49) arranged in the proximity of the outline (32) and suitable for deforming so as to release stresses created by the go and return punching steps.

7. A method according to any one of claims 1 to 6, also weakening at least one second outline by means of:
- a second go punching step by means of a second go punch presenting a solid shape substantially identical to the second outline and suitable for punching the thin plastics card (31) in a second go direction against a second die presenting a hollow shape substantially identical to the second outline and in alignment with the second go punch in order to be able to receive the material pushed by the second go punch; and
- a second return punching step by means of a second return punch presenting a solid shape substantially identical to the second outline in alignment with the second go punch and suitable for punching the thin plastics card (31) along a second return direction opposite to the second go direction.

8. A method according to claim 7, wherein the second go direction is identical to the go direction (Dₐ).

9. A method according to claim 7, wherein the second go direction is identical to the return direction (Dᵣ).

10. A method according to any one of claims 1 to 9, wherein the second outline circumscribes the outline (32).

11. A method according to any one of claims 1 to 10, wherein the distance between the first outline (32) and an adjacent second outline is greater than or equal to 300 µm.
